# EUROPÄISCHE PATENTSCHRIFT

(11) **EP 2 234 732 B1**
(45) Veröffentlichungstag und Bekanntmachung des Hinweises auf die Patenterteilung: **02.09.2015**
(21) Anmeldenummer: 08861397.1
(22) Anmeldetag: 15.12.2008
(51) Int. Cl.: B05C 5/02, B29C 44/46, B29C 31/04, B29C 47/14, B29C 47/70, C09D 175/08

(54) **VERFAHREN UND VORRICHTUNG ZUR HERSTELLUNG VON VERBUNDELEMENTEN AUF DER BASIS VON SCHAUMSTOFFEN AUF ISOCYANATBASIS**
METHOD AND APPARATUS FOR PRODUCING COMPOSITE ELEMENTS BASED ON FOAMS BASED ON ISOCYANATE
PROCÉDÉ ET DISPOSITIF DE FABRICATION D'ÉLÉMENTS COMPOSITES À PARTIR DE MOUSSES À BASE D'ISOCYANATE

(30) Priorität: 17.12.2007 EP 07150059
(43) Veröffentlichungstag der Anmeldung: 06.10.2010
(60) Teilanmeldung: 14152154.2
(73) Patentinhaber: BASF SE, 67056 Ludwigshafen (DE)
(72) Erfinder: SCHÖN, Lars, 48529 Nordhorn (DE); FABISIAK, Roland, 49448 Brockum (DE); HENSIEK, Rainer, 49328 Melle (DE); HUNTEMANN, Peter, 49448 Stemshorn (DE); SCHAPER, Bernd, 49356 Diepholz (DE); VIERECK, Rüdiger, 49448 Quernheim (DE); THOMAS, Maria, 49439 Mühlen (DE)
(86) Internationale Anmeldenummer: PCT/EP2008/067517
(87) Internationale Veröffentlichungsnummer: WO 2009/077490

(56) Entgegenhaltungen:
- EP-A- 0 770 466
- WO-A1-00/69571
- DE-A1- 4 225 618
- DE-A1- 19 757 678
- GB-A- 1 596 464
- JP-A- 2006 142 125
- US-A- 5 264 036
- US-A1- 2005 222 289

## Beschreibung

Die Erfindung betrifft ein Verfahren zur Herstellung von Verbundelementen aus mindestens einer Deckschicht und einem schaumbildenden Reaktionsgemisch, welches über mindestens ein feststehendes, mit Öffnungen versehenes Rohr auf die untere Deckschicht aufgetragen wird, gemäß Anspruch 1, sowie eine Vorrichtung gemäß Anspruch 25.

Die Herstellung von Verbundelementen aus insbesondere metallischen Deckschichten und einem Kern aus Schaumstoffen auf Isocyanatbasis, zumeist Polyurethan-(PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt. Insbesondere bei den Fassadenelementen spielt die Oberflächenstruktur der Schaumgrenze zur Deckschicht eine entscheidende Rolle. Aus verschiedensten Gründen kommt es bei der Herstellung der Sandwichelemente oftmals zu unerwünschten Lufteinschlüssen zwischen der unteren Deckschicht und dem Schaumstoff auf Isocyanatbasis, sogenannten Lunkern. Diese Lufteinschlüsse zwischen Blech und Schaumstoff können besonders bei starken Temperaturwechseln und dunklen Farbtönen der Deckschicht in der Anwendung als Fassadenelement zu Ausbeulungen des Bleches führen und die Fassade unansehnlich machen.

Weiterhin wird die Haftung zwischen Isolierschaum und unterer Deckschicht vermindert. Oftmals ist es so, dass bei Sandwichelementen die untere Deckschicht die schlechteste Haftung, bestimmt beim Zugversuch, aufweist. Weiterhin ist bei den üblichen mittels Sandwichelementen erstellten Konstruktionen die Blechunterseite die Außenseite der Fassade, sodass sie extremen Bedingungen wie Temperatur und Sogwirkungen ausgesetzt ist und deswegen stärker belastet wird als die Oberseite des Sandwichelementes, was zur Schaumablösung vom Blech und somit ebenfalls zu Ausbeulungen führen kann.

Demzufolge ist es erforderlich, ein Verfahren zu finden, welches die Lunkerbildung an der Oberfläche der Hartschaumstoffe auf Isocyanatbasis nachhaltig minimiert oder ganz vermeidet und auch bei widrigen äußeren Umständen des Produktionsverfahrens funktioniert. Das Verfahren soll kontinuierlich oder diskontinuierlich eingesetzt werden können. Eine diskontinuierliche Arbeitsweise kann zum Beispiel bei Anfahrvorgängen des Doppelbandes und bei mittels diskontinuierlich arbeitenden Pressen hergestellten Verbundelementen in Frage kommen. Eine kontinuierliche Anwendung erfolgt beim Einsatz von Doppelbandanlagen.

Das Reaktionsgemisch wird beim Doppelbandverfahren nach dem Stand der Technik maschinell mit Hoch- oder Niederdrucktechnik hergestellt und mittels oszillierenden Gießharken auf die untere Deckschicht aufgetragen. Dabei steht die Harke in Bandlaufrichtung und oszilliert über die Elementbreite. Nachteilig dieser Auftragungsart ist, dass bei einer erforderlichen Doppelüberlappung auf bereits aufgetragenes Reaktionsgemisch neues Material aufgetragen wird, so dass ein Gemisch mit unterschiedlichen Reaktionszuständen vorliegt. Letzteres führt dazu, dass die daraus resultierende Schaumoberfläche nicht gleichmäßig aufsteigt und als Folge beim Zuführen der oberen Deckschicht Luft mit eingeschlossen wird. Dieser Nachteil ist umso deutlicher je geringer die Zeit zwischen dem Reaktionsgemischauftrag und dem Start der Schäumreaktion ist. Die Geschwindigkeit des kontinuierlich arbeitenden Doppelbandes wird durch die maximal mögliche Oszillationsgeschwindigkeit des Mischkopfes begrenzt. Zusätzlich wirkt sich nachteilig aus, dass mit zunehmender Oszillation mehr Reaktionsgemisch im Randbereich und weniger im Mittenbereich der Deckschicht aufgetragen wird.

Im alternativen Schnellläuferverfahren wird das Reaktionsgemisch über einen Mehrfingerauftrag auf die untere Deckschicht aufgebracht, wobei ebenfalls Luftblasen im Reaktionsgemisch eingeschlossen werden und sich somit ebenfalls nur Lunker behaftete Oberflächen herstellen lassen. Zusätzlich muss das Reaktionsgemisch bei dieser Art des Auftrags über größere Bereiche seitlich "verfließen", so dass vor allem in den äußersten Bereichen, bevor die einzelnen Stränge des Mehrfingerauftrags ineinander laufen, größere Lunkerzonen auf der unteren und oberen Deckschicht entstehen. Weiterhin ist in dem Bereich, in welchem die Stränge des Mehrfingerauftrags ineinander fließen, häufig eine Riefe, zumindest jedoch eine Schaumstörung zu erkennen.

Zur Behebung dieser Mängel wird in DE 197 41 523 vorschlagen, nach dem Auftrag der flüssigen Reaktionsmischung für den Hartschaumstoff auf die Deckschicht die noch fließfähige Schaummischung mit Blasluft zu beaufschlagten. Dadurch soll die Oberfläche der Reaktionsmischung geglättet und der Einschluss von Luftblasen reduziert werden. Nachteilig ist hierbei zum einen, dass die Beaufschlagung mit der Luft einen zuden. Nachteilig ist hierbei zum einen, dass die Beaufschlagung mit der Luft einen zusätzlichen Verfahrensschritt bedeutet. Außerdem kann es durch die Blasluft zur Ausbildung einer Anhäufung der Reaktionsmischung kommen, die ebenfalls eine unregelmäßige Oberfläche hervorruft.

Die EP 770 466 A2 beschreibt ein Aufschäumverfahren und ein System zur kontinuierlichen Herstellung von Polyurethanschaumstoffblöcken nach der sogenannten frothing-Technologie. In diesem Zusammenhang werden Aufschäumvorrichtungen vorgeschlagen, die ein Rohr mit Öffnungen umfassen, welches parallel zu einem sich bewegenden Substrat angebracht ist.

JP 2006 142125 beschreibt ein Verfahren zur Herstellung von Verbundkörpern aus zwei Deckschichten und einem Hartschaumstoff auf Isocyanatbasis, wobei das Ausgangsmaterial für den Hartschaumstoff auf eine Deckschicht aufgebracht wird und der Auftrag des flüssigen Ausgangsmaterials mittels eines Rohres erfolgt, wobei die Zuführung der Ausgangskomponenten für der Hartschaumstoff von einem Ende des Rohres erfolgt un das Rohr Öffnungen aufweist und die Länge der Öffungen von der Zuführung bis zum anderen Ende des Rohres abnimmt. Dabei kann das Rohr entweder feststehen oder oszyllierend über die zu beauftragende Fläche bewegt werden.

Aufgabe der vorliegenden Erfindung war es nun, ein Auftragsverfahren für ein Reaktionsgemisch eines Hartschaumstoffes auf Isocyanatbasis, insbesondere ein PUR- oder PIR-System, auf ein horizontales Blech oder eine andere flexible oder starre Deckschicht zu finden, die in horizontaler Richtung kontinuierlich transportiert wird, wie es für die Herstellung von Sandwichelementen mit einem kontinuierlich arbeitenden Doppelband üblich ist. Dabei sollte es zu einer gegenüber dem Stand der Technik verbesserten Oberflächenstruktur des Schaums an der unteren Deckschicht, und insbesondere zu einer Vermeidung von Lunkern, kommen. Weiterhin sollte das Verfahren zu einer besseren Haftung zwischen Deckschicht und Hartschaum führen. Insbesondere sollte die Oberfläche des aufgetragenen Schaums gleichmäßig sein. Das Verfahren sollte vor allem für schnell startende Systeme geeignet sein, wobei die oben aufgeführten Nachteile des Mehrfingerauftrags und des oszillierenden Harken-Auftrags vermieden werden sollten.

Die Aufgabe konnte überraschenderweise gelöst werden, indem das Reaktionsgemisch mittels mindestens eines feststehenden, parallel und rechtwinklig zur Bewegungsrichtung zur Deckschicht b) angebrachten, mit Bohrungen versehenen Rohres c), im folgenden auch als Gießharke bezeichnet, auf die untere Deckschicht b) aufgetragen wird, wobei die Zuführung des Gemisches a) in der Mitte des Rohres c) erfolgt und die Länge der Öffnungen f) von der Mitte des Rohres c) zu dessen Enden hin abnimmt.

Gegenstand der Erfindung ist somit ein Verfahren zur Herstellung von Verbundkörpern gemäß Anspruch 1.

Die Begriffe Löcher und Bohrungen können im folgenden synonym verwendet werden.

Gegenstand der Erfindung ist weiterhin eine Vorrichtung gemäß Anspruch 25.

Vorzugsweise erfolgt der Auftrag des flüssigen Reaktionsgemisches auf die Deckschicht b) mittels mindestens zwei nebeneinander angeordneter, feststehender, parallel zur Deckschichtenebene und rechtwinklig zur Bewegungsrichtung der Deckschicht b) angebrachter, mit Öffnungen f) versehener Rohre c).

In einer bevorzugten Ausführungsform der Erfindung werden mindestens zwei mit Öffnungen f) versehene Rohre c) insbesondere so angeordnet, dass sie eine gerade Linie bilden. Vorzugsweise werden 2 bis 4, besonders bevorzugt 2 bis 3 und insbesondere 2 Rohre c) verwendet.

Die erfindungsgemäße Gießharke besitzt, wie beschrieben, eine rohrähnliche Form, mit Löchern an der Unterseite, verteilt über die gesamte Länge, und der Zufuhr des Reaktionsgemisches in deren Mitte sitzend. Bei Verwendung mehrerer Rohre c) wird die Zuführung vorzugsweise bei allen Rohren c) in der gleichen Weise vorgenommen.

Das Rohr c) beziehungsweise die nebeneinander angeordneten Rohre c) zusammen können eine Länge haben, die gleich der Breite der Deckschicht b) ist. Vorzugsweise ist die Länge des Rohres c) beziehungsweise der nebeneinander angeordneten Rohre c) zusammen geringer als die Breite der Deckschicht b), um sicherzustellen, dass die Reaktionsmischung nicht teilweise neben die Deckschicht b) aufgetragen wird. Dabei ist die Gießharke mittig über der Deckschicht b) angeordnet. Vorzugsweise bedeckt die Gießharke mindestens 70 % der Breite der Deckschicht b). Bei einer Breite der Deckschicht b) von 1,20 m, wie sie bei Sandwich-Elementen üblich ist, wäre in diesem Fall auf jeder Seite eine Breite von 25 cm nicht von der Gießharke bedeckt. Vorzugsweise bedecken die Gießharke beziehungsweise die nebeneinander angeordneten Gießharken mindestens 70 %, besonders bevorzugt mindestens 80 %, und insbesondere mindestens 95 % der Breite der Deckschicht b).

Die Harke ist üblicherweise in einer Höhe zur unteren Deckschicht b) von 5 bis 30 cm, bevorzugt 10 bis 30 cm, und insbesondere 15 bis 25 cm, angebracht.

Die Anzahl der Öffnungen f) entlang der Harke beträgt je nach Harkenlänge mindestens 2, bevorzugt mindestens 6, besonders bevorzugt 10 bis 50, und insbesondere 20 bis 40. Vorzugsweise ist die Anzahl der Löcher eine gerade Zahl.

Die Durchmesser der Öffnungen f) liegen im Bereich von 0,5 bis 10 mm, bevorzugt 1,0 mm bis 4 mm. Die Abständen der Öffnungen f) voneinander betragen vorzugsweise 5-200 mm, besonders bevorzugt 5 bis 60 mm, und insbesondere 10 bis 30 mm. Vorzugsweise ist der Abstand und der Durchmesser über die gesamte Länge des Rohres c) gleich.

Das Rohr c) hat einen Innendurchmesser von 0,2 bis 5 cm, bevorzugt 0,3 bis 2,5 cm und insbesondere 0,2 bis 2 cm.

Erfindungsgemäß nimmt die Länge der Öffnungen f) über die Länge des Rohres c) zu desser Ender hn ab. Unter der Länge der Öffnungen f) ist die Entfernung zu verstehen, die das Gemisch a) vom Inneren des Rohres c) bis zum Austritt aus dem Rohr c) zurücklegen muss. Dies kann auf unterschiedliche Weise geschehen. Zum einen kann der Innendurchmesser des Rohres c) verändert werden. Dies ist nicht bevorzugt, da derartige Bauteile schwierig herzustellen und zu säubern sind.

Vorzugsweise wird die Länge der Öffnungen f) verändert, indem an der Unterseite des Rohres c) ein Metallteil so angebracht wird, dass die Länge der Bohrungen in der gewünschten Weise verändert wird. Durch diese Maßnahme wird faktisch die Wandstärke des Rohres c) geändert. Die Lochlängen, betrachtet von dem Ort der Zuführung des Ausgangsmaterials für den Hartschaumstoff auf Isocyanatbasis a) bis zum Ende, verringern sich nicht linear, sondern exponentiell. Erfindungsgemäß erfolgt die Verlängerung der Öffnungen f) dergestalt, dass die Länge von der Zuführung des Gemisches a) zu den Enden des Rohres c) hin abnimmt. Das heißt, dass die Zuführung des Gemisches a) in der Mitte des Rohres c) erfolgt und die Länge der Öffnungen f) zu den Rändern hin abnimmt.

Die Länge der Öffnungen f) ist dabei vorzugsweise so zu wählen, dass das Verhältnis der Länge der Öffnungen f) vom Rand zur Mitte für jedes Rohr c) zwischen 1,1 und 10 beträgt. Besonders bevorzugt liegt das Verhältnis zwischen 2,5 und 10, insbesondere zwischen 5 und 10

Wenn mehrere Rohre c) verwendet werden, wird die Variation der Länge der Öffnungen f) für alle Rohre c) gleich ausgestaltet.

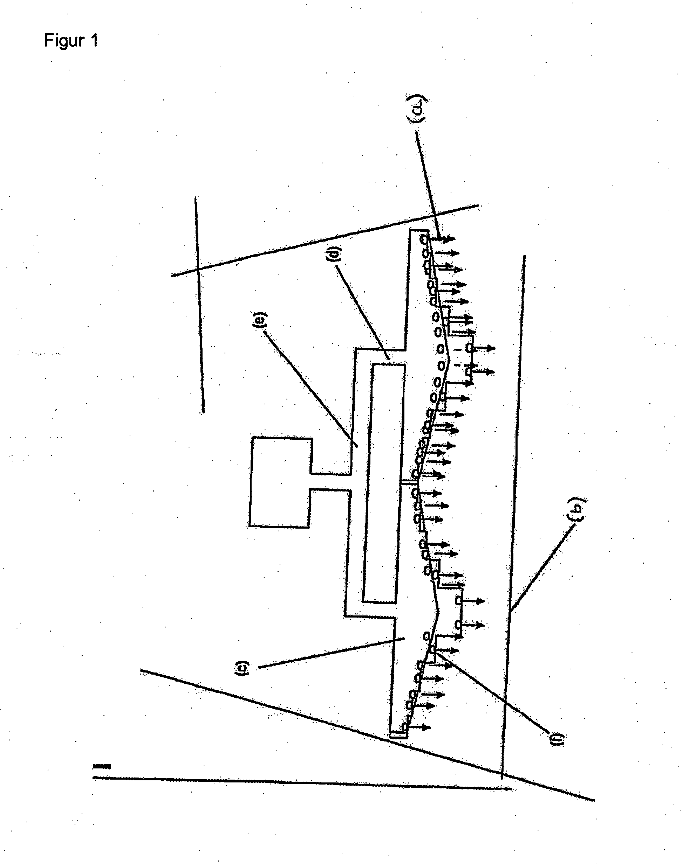

Jedes der mit Öffnungen f) versehenen Rohre c) ist mit einer Mischeinrichtung für die Mischung der Komponenten des flüssigen Ausgangsmaterials für den Hartschaumstoff auf Isocyanatbasis a) verbunden. Dies erfolgt üblicherweise mittels einer dazwischen liegenden Zuführung d) und e). Diese ist als Rohr ausgestaltet, im Falle der Verwendung von mehreren Rohren c) ist jedes mit der Zuführung verbunden. Dies kann durch ein Rohr geschehen, von dem wiederum Verbindungsrohre zu den Rohren c) ausgehen. Figur 1 zeigt eine solche Vorrichtung mit zwei Rohren c).

Der Durchmesser der Zuführungen d) ist vorzugsweise konstant. Er beträgt vorzugsweise 4 bis 30 mm, besonders bevorzugt 6 bis 22 mm.

Das erfindungsgemäße Verfahren ist geeignet für alle Hartschaumstoffe auf Isocyanat-basis, wie Polyurethan(PU)-Schäume, und Schäume mit Urethan- und Isocyanurat-gruppen, im folgenden auch als PUR/PIR-Schäume oder nur als PIR-Schäume bezeichnet. Für viele Anwendungen der nach dem erfindungsgemäßen Verfahren hergestellten Verbundkörper wird als Hartschaumstoff auf Isocyanatbasis a) bevorzugt ein PIR-Schaum eingesetzt.

Das erfindungsgemäße Verfahren wird vorzugsweise so ausgestaltet, dass die Menge des auf die Deckschicht b) aufgetragenen flüssigen Ausgangsmaterials für den Hartschaumstoff auf Isocyanatbasis a) zwischen 2 kg/min und 100 kg/min, bevorzugt zwischen 8 kg/min und 60 kg/min, beträgt.

Die Viskosität des flüssigen Ausgangsmaterials für den Hartschaumstoff auf Isocyanatbasis a) liegt vorzugsweise bei 25 °C zwischen 50 mPa*s und 2000 mPa*s, besonders bevorzugt zwischen 100 mPa*s und 1000 mPa*s.

Besonders geeignet ist das Verfahren für Schaumstoffe mit einer geringen Startzeit des Systems. Die Startzeit der für das Verfahren eingesetzten Systeme liegt vorzugsweise unter 15s, bevorzugt unter 12s, besonders bevorzugt unter 10s und insbesondere unter 8s bei einer Abbindezeit des Systems zwischen 20 - 60 s. Unter Startzeit versteht man die Zeit zwischen dem Mischen der Polyol- und der Isocyantkomponente und dem Start der Urethanreaktion. Unter der Abbindezeit wird die Zeit vom Vermischen der Ausgangskomponenten der Schaumstoffe bis zu dem Zeitpunkt verstanden, an dem das Reaktionsprodukt nicht mehr fließfähig ist. Die Abbindezeit wird je nach produzierter Elementdicke sowie Doppelbandgeschwindigkeit angepasst.

In einer besonderen Ausführungsform des Verfahrens kann zwischen die Deckschicht b) und den Hartschaumstoff auf Isocyanatbasis a) ein Haftvermittler aufgebracht werden. Als Haftvermittler können die aus dem Stand der Technik bekannten Haftvermittler eingesetzt werden. Insbesondere werden Polyurethane eingesetzt, wobei sowohl reaktive Ein- als auch reaktive Zwei-Komponenten-Systeme verwendet werden können.

Der Auftrag des Haftvermittlers erfolgt in Bewegungsrichtung der Deckschicht b) vor dem mit Bohrungen versehenen Rohr c). Der Abstand zwischen dem Aufbringen des Haftvermittlers und dem Aufbringen der Ausgangskomponenten für den Hartschaumstoff auf Isocyanatbasis a) ist dabei so zu wählen, dass der Haftvermittler beim bringen der Ausgangskomponenten für den Hartschaumstoff auf Isocyanatbasis a) noch nicht vollständig ausreagiert ist.

Der Haftvermittler kann durch bekannte Verfahren, beispielsweise durch Aufsprühen, auf die Deckschicht b) aufgebracht werden. Vorzugsweise wird der Haftvermittler mittels einer rotierenden flachen Scheibe, die in der Waagerechten oder in einer geringen Abweichung von der Waagerechten von bis zu 15°, vorzugsweise parallel zu der Deckschicht b) angebracht ist, auf die Deckschicht b) aufgebracht. Die Scheibe kann im einfachsten Falle kreisrund oder elliptisch und eben sein. Vorzugsweise ist die Scheibe gezackt oder sternförmig ausgestaltet, wobei die Spitzen des Sterns nach oben gebogen sein können.

Die Scheibe kann vollkommen flach oder an der Seite nach oben abgerundet oder abgekantet sein. Bevorzugt wird eine an den Seiten nach oben abgerundete oder abgekantete Scheibe eingesetzt. In die Abkantung werden Löcher eingebracht, um den Austrag des Haftvermittlers zu gewährleisten. Durchmesser und Anzahl der Löcher werden so aufeinander abgestimmt, dass ein möglichst gleichmäßiger feinverteilter

Auftrag des Haftvermittlers auf die unterliegende Deckschicht b) möglich ist, sämtliches auf die Scheibe aufgebrachtes Material ausgetragen werden kann, und der Wartungsaufwand der Scheibe minimal ist.

In einer Ausführungsform ist die Scheibe kaskadenartig gestaltet. Dabei sind die Kaskaden von der Rotationsachse nach außen hin ansteigend angeordnet. An den Übergängen von einer zur benachbarten Kaskade können Löcher in der Scheibe angebracht sein, so dass ein Teil des Haftvermittlers an diesen Kaskadenübergängen auf die untere Deckschicht b) ausgetragen werden kann. Solch eine kaskadenartig gestaltete Scheibe sorgt für einen besonders gleichmäßigen Auftrag des Haftvermittlers auf die darunter befindliche Deckschicht b). Der Auftrag des Haftvermittlers auf die Scheibe erfolgt möglichst nah an der Rotationsachse. Überraschend wurde dabei gefunden, dass der Haftvermittler besonders gleichmäßig auf die untere Deckschicht b) verteilt wird, wenn der Auftragspunkt des Haftvermittlers parallel zur Produktionsrichtung exakt vor bzw. hinter der Rotationsachse liegt.

Die Scheibe weist, abhängig von der Breite der Deckschicht b), einen Durchmesser zwischen 0,05 bis 0,3 m, bevorzugt 0,1 bis 0,25 m, besonders bevorzugt 0,12 bis 0,22 m bezogen auf die lange Seite, auf. Sie ist in einer Höhe von 0,02 bis 0,2 m, bevorzugt 0,03 bis 0,18 m, besonders bevorzugt 0,03 bis 0,15 m über der zu benetzenden Deckschicht b) angebracht.

Es kann eine Scheibe mit 2 bis 4, bevorzugt 2 bis 3, besonders bevorzugt 2 Kaskaden eingesetzt werden.

Eine derartige Auftragsvorrichtung für den Haftvermittler ist beispielsweise in WO 2006/029786 beschrieben.

Das Verfahren und die beschriebene Vorrichtung sind insbesondere geeignet für Systeme mit physikalischen Treibmitteln, insbesondere Pentanen. Weiterhin ist das Verfahren bevorzugt für die Herstellung von Verbundelementen mit starren Deckschichten geeignet.

Als Deckschicht b) können flexible oder starre, bevorzugt starre Deckschichten, wie Gipskartonplatten, Glasfliese, Aluminiumfolien, Aluminium- Kupfer- oder Stahlbleche, bevorzugt Aluminiumfolien, Aluminium- oder Stahlbleche, besonders bevorzugt Stahlbleche verwendet werden. Die Stahlbleche können beschichtet oder unbeschichtet sein. Die Stahlbleche können vorbehandelt werden, beispielsweise mit Corona-, Lichtbogen-, Plasmabehandlung oder anderen üblichen Methoden.

Die Deckschicht b) wird vorzugsweise mit einer konstanten Geschwindigkeit von 1 bis 60 m/min, bevorzugt 2 bis 150 m/min, besonders bevorzugt 2,5 bis 30 m/min und insbesondere 2,5 bis 20 m/min transportiert. Dabei befindet sich die Deckschicht b) zumindest ab dem Auftrag des Schaumsystems b), vorzugsweise während der gesamten Zeitdauer ab dem Aufbringen des Haftvermittlers in einer waagerechten Position.

Beim Verfahren werden dabei bei der Verwendung von Blechen und Folien als Deckschichten nacheinander die Deckschichten von einer Rolle abgecoilt, gegebenenfalls profiliert, erwärmt, gegebenenfalls vorbehandelt, um die Beschäumbarkeit mit Polyurethan zu erhöhen, optional der Haftvermittler aufgetragen, mit dem Ausgangsmaterial für den Hartschaumstoff auf Isocyanatbasis a) mittels der stehenden Harke beschäumt, im Doppelband ausgehärtet und letztlich auf die gewünschte Länge zugeschnitten.

Die für das Verfahren eingesetzten Hartschaumstoffe auf Isocyanatbasis a) werden auf übliche und bekannte Weise durch Umsetzung von Polyisocyanaten mit Verbindungen mit mindestens zwei mit Isocyanatgruppen reaktiven Wasserstoffatomen in Anwesenheit von Treibmitteln, Katalysatoren und üblichen Hilfsund/oder Zusatzstoffen hergestellt. Zu den eingesetzten Ausgangsstoffen ist im einzelnen folgendes zu sagen.

Als organische Polyisocyanate kommen alle bekannten organischen Di- und Polyisocyanate in Betracht, vorzugsweise aromatische mehrwertige Isocyanate.

Im einzelnen seien beispielhaft genannt 2,4- und 2,6-Toluylen-diisocyanat (TDI) und die entsprechenden Isomerengemische, 4,4'-, 2,4'- und 2,2'-Diphenyl-methandiisocyanat (MDI) und die entsprechenden Isomerengemische, Mischungen aus -4,4'und 2,4'-Diphenylmethan-diisocyanaten, Polyphenyl-polymethylen-polyisocyanate, Mischungen aus 4,4'-, 2,4'- und 2,2'-Diphenyl-methan-diisocyanaten und Polyphenylpolymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Uretdion-, Carbamat-, Isocyanurat-, Carbodiimid-, Allophanat- und/oder Urethangruppen enthaltende Di- und/oder Potyisocyanate. Die modifizierten Polyisocyanate können gegebenenfalls miteinander oder mit unmodifizierten organischen Polyisocyanaten wie z.B. 2,4'-, 4,4'-Diphenylmethandiisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI, insbesondere mit einem NCO-Gehalt von 29 bis 33 Gew.-% und einer Viskosität bei 25°C im Bereich von 150 bis 1000 mPas.

Als Verbindungen mit mindestens zwei gegenüber Isocyanatgruppen reaktiven Wasserstoffatomen kommen solche in Betracht, die mindestens zwei reaktive Gruppen, ausgewählt aus OH-Gruppen, SH-Gruppen, NH-Gruppen, NH₂-Gruppen und CHaciden Gruppen, tragen, bevorzugt OH-Gruppen, und insbesondere Polyetheralkohole und/oder Polyesteralkohole mit OH-Zahlen im Bereich von 25 bis 800 mg KOH/g zum Einsatz.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyesterole haben zumeist eine Funktionalität von 1,5 - 4.

Insbesondere kommen Polyetherpolyole, die nach bekannten Verfahren, beispielsweise durch anionische Polymerisation von Alkylenoxiden an H-funktionellenStartsubstanzen in Gegenwart von Katalysatoren, vorzugsweise Alkalihydroxiden oder Doppelmetallcyanidkatalysatoren (DMC-Katalysatoren), hergestellt werden, zum Einsatz.

Als Alkylenoxide werden zumeist Ethylenoxid oder Propylenoxid, aber auch Tetrahydrofuran, verschiedene Butylenoxide, Styroloxid, vorzugsweise reines 1,2-Propylenoxid eingesetzt. Die Alkylenoxide können einzeln, alternierend nacheinander oder als Mischungen verwendet werden.

Als Startsubstanzen kommen insbesondere Verbindungen mit mindestens 2, vorzugsweise 2 bis 8 Hydroxylgruppen oder mit mindestens zwei primären Aminogruppen im Molekül zum Einsatz.

Als Startsubstanzen mit mindestens 2, vorzugsweise 2 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens zwei primären Aminogruppen im Molekül werden vorzugsweise aromatische Di- und/oder Polyamine, beispielsweise Phenylendiamine, 2,3-, 2,4-, 3,4- und 2,6- Toluylendiamin und 4,4'-, 2,4'- und 2,2'-Diaminodiphenylmethan sowie aliphatische Di- und Polyamine, wie Ethylendiamin, eingesetzt.

Die Polyetherpolyole besitzen eine Funktionalität von vorzugsweise 2 bis 8 und Hydroxylzahlen von vorzugsweise 25 mg KOH/g bis 800 mg KOH/g und insbesondere 150 mg KOH/g bis 570 mg KOH/g.

Zu den Verbindungen mit mindestens zwei gegenüber Isocyanat reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Herstellung der Hartschaumstoffe wird üblicherweise in Anwesenheit von Treibmitteln, Katalysatoren, Flammschutzmitteln und Zellstabilisatoren sowie, falls erforderlich weiteren Hilfs- und/oder Zusatzstoffen durchgeführt.

Als Treibmittel können chemische Treibmittel wie Wasser und/oder Ameisensäure verwendet werden, die mit Isocyanatgruppen unter Abspaltung von Kohlendioxid bzw. Kohlendioxid und Kohlenmonoxid reagieren. Bevorzugt können in Kombination mit oder vorzugsweise an Stelle von Wasser auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Treibmittel werden zumeist ausgewählt aus der Gruppe, enthaltend Ameisensäure, Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Beispielhaft seien genannt Propan, n-Butan, iso- und Cyclobutan, n-, iso- und Cyclopentan, Cyclohexan, Dimethylether, Methylethylether, Methylbutylether, Ameisensäuremethylester, Aceton, sowie Fluoralkane_{,} die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Besonders bevorzugt als Treibmittelmischung ist eine Mischung aus Ameisensäure, Wasser und Pentan.

Die Treibmittelkomponente wird üblicherweise in einer Menge von 1 bis 45 Gew.-%, bevorzugt 1 bis 30 Gew.-%, besonders bevorzugt 1,5 bis 20 Gew.-% und insbesondere 2 bis 15 Gew.-%, bezogen auf das Gesamtgewicht der Komponenten Polyol, Treibmittel, Katalysatorsystem, und eventuell Schaumstabilisatoren, Flammschutzmittel und sonstigen Zusatzstoffen, eingesetzt.

Die Polyurethan- oder Polyisocyanuratschaumstoffe enthalten üblicherweise Flammschutzmittel. Vorzugsweise werden bromfreie Flammschutzmittel eingesetzt. Besonders bevorzugt sind Phosphoratome enthaltende Flammschutzmittel, insbesondere werden Trischlorisopropylphosphat, Diethylethanphosphonat, Triethylphosphat und/oder Diphenylkresylphosphat eingesetzt.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind beispielsweise basische Amine, wie sekundäre aliphatische Amine, Imidazole, Amidine, Alkanolamine, Lewissäuren oder metallorganische Verbindungen, insbesondere solche auf Basis von Zinn. Auch Katalysatorsysteme, bestehend aus einer Mischung verschiedener Katalysatoren, können eingesetzt werden.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Antioxidantien, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Hartschaumstoffe auf Isocyanatbasis a) werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich zwischen 100 und 220, vorzugsweise zwischen 115 und 180, liegt.

Bei der Herstellung von Polyisocyanuratschäumen kann auch mit einem Index von > 180, im allgemeinen 180 bis 700, bevorzugt 200 bis 550, besonders bevorzugt 250 bis 500 und insbesondere 270 bis 400 gearbeitet werden.

Die Polyurethan-Hartschaumstoffe können diskontinuierlich oder kontinuierlich mit Hilfe bekannter Mischvorrichtungen hergestellt werden. Die Vermischung der Ausgangskomponenten kann mit Hilfe bekannter Mischvorrichtungen erfolgen.

Üblicherweise werden die Hartschaumstoffe auf Isocyanatbasis a) nach dem Zweikomponenten-Verfahren hergestellt. Bei diesem Verfahren werden die Verbindungen mit mindestens zwei gegenüber Isocyanatgruppen reaktiven Wasserstoffatomen mit den Treibmitteln, den Katalysatoren sowie den weiteren Hilfs-und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebraucht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen vermischt werden.

Die Dichte der hergestellten Hartschaumstoffe beträgt vorzugsweise 10bis 400kg/m3, vorzugsweise 20 bis 200, insbesondere 30 bis 100 kg/m3.

Die Dicke der Verbundelemente liegt üblicherweise im Bereich zwischen 5 bis 250 mm.

In Figur 1 ist die Vorrichtung mit zwei Rohren c) dargestellt.

### Beispiele:

### A) Zusammensetzung eines PUR-Systems

### Polyol-Komponente (A-Komponente)

| | |
|---|---|
| 44 Teile | Polyetherol 1 bestehend aus Propylenoxid und einem aminischen Starter, Funktionalität 4, Hydroxylzahl 400 mg KOH/g |
| 26 Teil | Polyetherol 2 bestehend aus Propylenoxid und Saccharose als Starter, OHZ 400 mg KOH/g |
| 5 Teile | Polyetherol 3 bestehend aus Propylenoxid und Trimethylolpropan als Starter, OHZ 200 mg KOH/g |
| 20 Teile | Flammschutzmittel 1 Trischlorisopropylphosphat, TCPP |
| 2 Teile | siliconhaltiger Stabilisator |
| 2 Teile | Katalysator 1 aminhaltiger PUR-Katalysator |
| 1 Teil | Katalysator 2 aminhaltiger Treib-Katalysator |
| | |
| Treibmittel 1 | n-Pentan |
| Treibmittel 2 | Wasser |
| Treibmittel 3 | wässrige Ameisensäure, 85%-ig |

Isocyanat-Komponente (B-Komponente)
Isocyanat Lupranat M50, polymeres MDI (BASF AG), NCO-Gehalt 31%, Viskosität 500 mPas bei 25 °C.

A-, B-Komponente und Treibmittel wurden in solchen Verhältnissen zur Reaktion gebracht das die Kennzahl im Bereich 130 lag und eine Rohdichte von 39 g/L erreicht wurde.

### B) Zusammensetzung eines PIR-Systems

### Polyol-Komponente (A-Komponente)

| | | |
|---|---|---|
| 66 Teile | Polyesterol 1 bestehend aus Phthalsäureanhydrid, Diethylenglycol und Ölsäure, Funktionalität 1,8, Hydroxylzahl 200 mg KOH/g | |
| 30 Teile | Flammschutzmittel 1 | Trischlorisopropylphosphat, TCPP |
| 1,5 Teile | Stabilisator 1 | siliconhaltiger Stabilisator |
| 1,5 Teile | Katalysator 1 | PIR-Katalysator, Salz einer Carbonsäure |
| 1 Teil | Katalysator 2 | aminhaltiger PUR-Katalysator |
| Treibmittel 1 | n-Pentan | |
| Treibmittel 2 | Wasser | |
| Treibmittel 3 | wässrige Ameisensäure, 85%-ig | |

Isocyanat-Komponente (B-Komponente)
Isocyanat Lupranat M50, polymeres MDI (BASF AG), NCO-Gehalt 31%, Viskosität 500 mPas bei 25 °C.

Die Polyol- und die Isocyanat-Komponente sowie das Treibmittel wurden in solchen Verhältnissen miteinander vermischt, dass die Kennzahl im Bereich 350 lag und eine Rohdichte von 43g/L erreicht wurde.

Das Polyurethan- bzw. Polyisocyanurat-System a) wurde nacheinander mittels einer oszillierenden Gießharke und einer stehenden Gießharke, bestehend aus zwei gleich langen, in einer Reihe angeordneten Rohren c) aufgetragen.

Die oszillierende Gießharke hatte die Dimensionen 25 cm x 1,5 cm, besaß 41 Löcher mit einem Durchmesser von 1,6 mm und einem Lochabstand von 5mm und osziliierte mit einer Geschwindigkeit von 0,7 m/s über eine Strecke von 1,0m.

Die stehende Harke hatte die Dimensionen 95 cm x 15 cm, besaß 24 Löcher mit einem Durchmesser von 2,8 mm und einem Lochabstand von 40 mm. Die Lochlängen der Öffnungen f) für jede der beiden Rohre c) stieg exponentiell vom Rand zur Mitte an, beginnend von 3 mm bis 19 mm.

Die Auftragsleistung betrug bei beiden Harkensystemen 25.1kg/min.

Die metallische Deckschicht wurde nicht corona-behandelt. Das Doppelband hatte eine Breite von 1,2 m und wurde mit einer konstanten Geschwindigkeit von 5,0 m/min vorangetrieben. Die Temperatur des Bleches betrug 37 °C, die des Doppelbandes wurde eingestellt auf 40 °C (PUR) bzw. 60°C (PIR). Die Sandwichelementstärke betrug 100 mm.

Nach Aushärtung des Systems wurden Prüfkörper der Abmessung 100x100x5 mm gesägt und die Haftung des Schaums zur Deckschicht nach DIN EN ISO 527-1 / DIN 53292 bestimmt.

Die Häufigkeit von Oberflächendefekten wurde durch eine optische Methode quantitativ bestimmt. Dafür wurde in einem Abstand von einem Millimeter zur unteren Deckschicht, dass heißt der Deckschicht, auf der die Polyurethan-Reaktionslösung im Doppelbandverfahren aufgetragen wurde, eine Ebene in eine Schaumprobe gelegt und überstehendes Material abgetrennt. Die so erhaltene Schaumoberfläche wurde in einem Öffnungswinkel von 5° beleuchtet und die Fläche des Schattenwurfs durch Oberflächendefekte ins Verhältnis mit der gesamten Oberfläche gesetzt. Dazu wurde die beleuchtete Schaumoberfläche fotografiert und die Schaumbilder anschließend binarisiert. Die integrierte Fläche der schwarzen Bereiche der Binärbilder wurde in Relation zu der Gesamtfläche der Bilder gesetzt und stellt somit ein Maß für die Häufigkeit von Oberflächendefekten dar. Des weiteren erfolgte eine zusätzliche qualitative Beurteilung der Oberflächenbeschaffenheit der Schäume, wobei die Deckschicht von einer 1m x 2 m großen Schaumprobe entfernt wurde und die Oberfläche optisch beurteilt wurde.

Die verschiedenen Versuche mit unterschiedlichen Hartschaumsystemen mit oszillierender sowie stehender Gießharke sind in Tabelle 1 gegenüber gestellt.

**Tabelle 1. Versuchsparameter, und Ergebnisse. Beurteilt wird dabei die Gleichmäßigkeit des Auftrags über die Oberfläche der Deckschicht.**

| Vers.-Nr. | Schaumsystem | Harkensystem | Druckfestigkeit [N/mm²] | Druck-E-Modul [N/mm²] | Zugfestigkeit [N/mm²] | Zug-E-Modul [N/mm²] | Auftragsbild | Lunkeranzahl /OF-Störung |
|---|---|---|---|---|---|---|---|---|
| 1 (V) | PUR | oszill. | 0,14 | 2,7 | 0,10 | 4,1 | Riefenmuster | 10% |
| 2 | PUR | stehend | 0,18 | 3,4 | 0,14 | 4,5 | Eben und musterfrei | 2 % |
| 3 (V) | PIR | oszill. | 0,13 | 3,1 | 0,10 | 3,9 | Riefenmuster | 12% |
| 4 | PIR | stehend | 0,18 | 4,2 | 0,17 | 5,5 | Eben und musterfrei | 1% |

| | | | | | | | | |
|---|---|---|---|---|---|---|---|---|
| V - Vergleichsbeispiel | | | | | | | | |

Die Ergebnisse in Tabelle 1 zeigen, dass die Häufigkeit der Ausbildung von Oberflächendefekten an der Grenzfläche zu metallischen Deckschichten durch den Einsatz der stehenden Gießharke im Vergleich zum Stand der Technik deutlich verringert und die mechanischen Eigenschaften des Schaums sowie die Haftung zwischen Hartschaum und Deckschicht verbessert wird.

## Patentansprüche

1. Verfahren zur Herstellung von Verbundkörpern, bestehend aus mindestens einer Deckschicht (b) und einem Hartschaumstoff auf Isocyanatbasis (a), wobei die Deckschicht (b) kontinuierlich bewegt wird und das Ausgangsmaterial für den Hartschaumstoff auf Isocyanatbasis (a) auf die Deckschicht (b) aufgebracht wird und der Auftrag des flüssigen Ausgangsmaterials für den Hartschaumstoff auf Isocyanatbasis (a) mittels mindestens einem feststehenden, parallel zur Deckschichtenebene und rechtwinklig zur Bewegungsrichtung der Deckschicht (b) angebrachten, mit Öffnungen (f) versehenen Rohre (c) erfolgt, wobei die Öffnungen (f) einen Durchmesser und eine Länge aufweisen, wobei die Zuführung des Gemisches (a) in der Mitte des Rohres (c) erfolgt und die Länge der Öffnungen (f) von der Mitte des Rohres (c) zu dessen Enden hin abnimmt.

2. Verfahren nach Anspruch 1, wobei mindestens zwei nebeneinander angeordnete Rohre (c) verwendet werden.

3. Verfahren nach Anspruch 2, wobei die mit Öffnungen (f) versehener Rohre (c) so angeordnet sind, dass sie eine gerade Linie bilden.

4. Verfahren nach Anspruch 1, wobei sich die mit Öffnungen (f) versehenen Rohre (c) über mindestens 70 % der Breite der Deckschicht (b) erstrecken wobei an den Rändern der Deckschicht (b) je ein gleich breiter Bereich nicht von dem Rohr bedeckt ist.

5. Verfahren nach Anspruch 1, wobei sich die mit Öffnungen (f) versehenen Rohre (c) über mindestens 80 % der Breite der Deckschicht (b) erstrecken, wobei an den Rändern der Deckschicht (b) je ein gleich breiter Bereich nicht von dem Rohr bedeckt ist.

6. Verfahren nach Anspruch 1, wobei das mit Öffnungen (f) versehene Rohr (c) in einer Höhe von 5 bis 30 cm oberhalb der Deckschicht (b) angebracht ist.

7. Verfahren nach Anspruch 1, wobei der Durchmesser des mit Öffnungen (f) versehenen Rohres (c) 0,2 bis 5 cm beträgt.

8. Verfahren nach Anspruch 1, wobei der Innendurchmesser des mit Öffnungen (f) versehenen Rohres (c) von der Mitte zu den Rändern des Rohres konstant bleibt

9. Verfahren nach Anspruch 1, wobei das Rohr so ausgestaltet ist, dass die Variation der Länge der Öffnungen (f) bei Verwendung von mehreren Rohren (c) bei allen Rohren (c) gleich ausgestaltet sind.

10. Verfahren nach Anspruch 1, wobei das Verhältnis der Länge der Öffnungen (f) zwischen dem Ort der Zuführung und dem Ende des Rohres (c) für jedes Rohr zwischen 1,1 und 10 ist.

11. Verfahren nach Anspruch 1, wobei der Durchmesser der Öffnungen (f) 0,5 bis 10 mm beträgt.

12. Verfahren nach Anspruch 1, wobei der Abstand der Öffnungen (f) voneinander 5 bis 200 mm beträgt.

13. Verfahren nach Anspruch 1, wobei der Durchmesser der Öffnungen (f) über die gesamte Länge des Rohres (c) gleich ist.

14. Verfahren nach Anspruch 1, wobei der Abstand zwischen den Öffnungen (f) über die gesamte Länge des Rohres (c) gleich ist

15. Verfahren nach Anspruch 1, wobei die Anzahl der Öffnungen (f) des Rohres (c) gerade ist.

16. Verfahren nach Anspruch 1, wobei die Anzahl der Öffnungen (f) jedes Rohres (c) ≥ 2 ist.

17. Verfahren nach Anspruch 1, wobei die Mischung der Komponenten des flüssigen Ausgangsmaterials für den Hartschaumstoff auf Isocyanatbasis (a) in einer Mischeinrichtung erfolgt, die über Zuführungen (d) und (e) mit allen mit Öffnungen (f) versehenen Rohren (c) verbunden ist.

18. Verfahren nach Anspruch 1, wobei jedes der mit Öffnungen (f) versehenen Rohre (c) mit genau einer Zuführung (d) verbunden ist.

19. Verfahren nach Anspruch 1, wobei jedes der mit Öffnungen (f) versehenen Rohre (c) mit einer Mischeinrichtung für die Mischung der Komponenten des flüssigen Ausgangsmaterials für den Hartschaumstoff auf Isocyanatbasis (a) verbunden ist.

20. Verfahren nach Anspruch 1, wobei der Durchmesser der Zuführungen (d) konstant ist.

21. Verfahren nach Anspruch 1, wobei die Zuführungen (d) einen Durchmesser von 4 bis 30 mm aufweisen.

22. Verfahren nach Anspruch 1, wobei der Hartschaumstoff auf Isocyanatbasis (a) Isocyanuratgruppen enthält.

23. Verfahren nach Anspruch 1, wobei die Viskosität des flüssigen Ausgangsmaterials für den Hartschaumstoff auf Isocyanatbasis (a) bei 25 °C zwischen 50 mPa*s und 2000 mPa*s liegt.

24. Verfahren nach Anspruch 1, wobei die Menge des auf die Deckschicht (b) aufgetragenen flüssigen Ausgangsmaterials für den Hartschaumstoff auf Isocyanatbasis (a) zwischen 2 kg/min und 100 kg/min beträgt.

25. Vorrichtung zum Auftrag von flüssigen Reaktionsgemischen auf eine Deckschicht (b) und wobei die Deckschicht (b) kontinuierlich bewegt wird und das Ausgangsmaterial für den Hartschaumstoff auf Isocyanatbasis (a) auf die Deckschicht (b) aufgebracht wird, wobei der Auftrag des flüssigen Reaktionsgemisches auf die Deckschicht (b) mittels mindestens einem feststehenden, parallel zur Deckschichtenebene und rechtwinklig zur Bewegungsrichtung der Deckschicht (b) angebrachten, mit Öffnungen (f) versehenen Rohres (c) erfolgt, wobei die Öffnungen (f) einen Durchmesser und eine Länge aufweisen, wobei die Zuführung des Gemisches (a) in der Mitte des Rohres (c) erfolgt und die Länge der Öffnungen (f) von der Mitte des Rohres (c) zu dessen Enden hin abnimmt.

26. Vorrichtung nach Anspruch 25, wobei der Auftrag des flüssigen Reaktionsgemisches auf die Deckschicht (b) mittels mindestens zwei nebeneinander angeordneter, feststehender, parallel zur Deckschichtenebene und rechtwinklig zur Bewegungsrichtung der Deckschicht (b) angebrachten, mit Öffnungen (f) versehener Rohre (c) erfolgt.

## Claims

1. A process for the production of composites composed of at least one outer layer (b) and of an isocyanate-based rigid foam (a), where the outer layer (b) is moved continuously and the starting material for the isocyanate-based rigid foam (a) is applied to the outer layer (b) and the application of the liquid starting material for the isocyanatebased rigid foam (a) is achieved by means of at least one fixed tube (c) which has openings (f) and which has been placed so as to be parallel to the plane of the outer layer and at right angles to the direction of movement of the outer layer (b), where the openings (f) have a diameter and a length, where the feed of the mixture (a) takes place in the middle of the tube (c), and the length of the openings (f) decreases in the direction from the middle of the tube (c) to its ends.

2. The process according to claim 1, where at least two tubes (c) arranged alongside one another are used.

3. The process according to claim 2, where the arrangement of the tubes (c) having openings (f) is such that they form a straight line.

4. The process according to claim 1, where the tubes (c) having openings (f) extend over at least 70% of the width of the outer layer (b), and at each of the edges of the outer layer (b) there is a region of equal width not covered by the tube.

5. The process according to claim 1, where the tubes (c) having openings (f) extend over at least 80% of the width of the outer layer (b), and at each of the edges of the outer layer (b) there is a region of equal width not covered by the tube.

6. The process according to claim 1, where the tube (c) having openings (f) has been placed at a height of from 5 to 30 cm above the outer layer (b).

7. The process according to claim 1, where the diameter of the tube (c) having openings (f) is from 0.2 to 5 cm.

8. The process according to claim 1, where the internal diameter of the tube (c) having openings (f) remains constant from the middle to the ends of the tube.

9. The process according to claim 1, where the design of the tube is such that, if a plurality of tubes (c) is used, the variation of the length of the openings (f) has been designed so as to be identical in all of the tubes (c).

10. The process according to claim 1, where the ratio of the length of the openings (f) between the site of the feed and the end of the tube (c) is from 1.1 to 10 for each tube.

11. The process according to claim 1, where the diameter of the openings (f) is from 0.5 to 10 mm.

12. The process according to claim 1, where the distance between the openings (f) is from 5 to 200 mm.

13. The process according to claim 1, where the diameter of the openings (f) is the same over the entire length of the tube (c).

14. The process according to claim 1, where the distance between the openings (f) is the same over the entire length of the tube (c).

15. The process according to claim 1, where the number of the openings (f) of the tube (c) is even.

16. The process according to claim 1, where the number of the openings (f) of each tube (c) is ≥ 2.

17. The process according to claim 1, where the mixing of the components of the liquid starting material for the isocyanate-based rigid foam (a) takes place in mixing equipment which has connection by way of feeds (d) and (e) to all of the tubes (c) having openings (f).

18. The process according to claim 1, where each of the tubes (c) having openings (f) has connection to precisely one feed (d).

19. The process according to claim 1, where each of the tubes (c) having openings (f) has connection to mixing equipment for the mixing of the components of the liquid starting material for the isocyanatebased rigid foam (a).

20. The process according to claim 1, where the diameter of the feeds (d) is constant.

21. The process according to claim 1, where the diameter of the feeds (d) is from 4 to 30 mm.

22. The process according to claim 1, where the isocyanate-based rigid foam (a) comprises isocyanurate groups.

23. The process according to claim 1, where the viscosity of the liquid starting material for the isocyanate-based rigid foam (a) is from 50 mPa*s to 2000 mPa*s at 25°C.

24. The process according to claim 1, where the amount of the liquid starting material applied to the outer layer (b) for the isocyanate-based rigid foam (a) is from 2 kg/min to 100 kg/min.

25. An apparatus for the application of liquid reaction mixtures to an outer layer (b), where the outer layer (b) is moved continuously and the starting material for the isocyanate-based rigid foam (a) is applied to the outer layer (b), where the application of the liquid reaction mixture to the outer layer (b) takes place by means of at least one fixed tube (c) which has openings (f) and which has been placed so as to be parallel to the plane of the outer layers and at right angles to the direction of movement of the outer layer (b), where the openings (f) have a diameter and a length, where the feed of the mixture (a) takes place in the middle of the tube (c), and the length of the openings (f) decreases in the direction from the middle of the tube (c) to its ends.

26. The apparatus according to claim 25, where the application of the liquid reaction mixture to the outer layer (b) takes place by means of at least two fixed tubes (c) arranged alongside one another, which have openings (f) and which have been placed so as to be parallel to the plane of the outer layers and at right angles to the direction of movement of the outer layer (b).

## Revendications

1. Procédé de fabrication de corps composites, constitués d'au moins une couche supérieure (b) et d'une mousse dure à base d'isocyanate (a), la couche supérieure (b) étant déplacée en continu et le matériau de départ pour la mousse dure à base d'isocyanate (a) étant appliqué sur la couche supérieure (b), et l'application du matériau de départ liquide pour la mousse dure à base d'isocyanate (a) ayant lieu au moyen d'au moins un tube (c) fixe, disposé parallèlement au plan de la couche supérieure et perpendiculairement à la direction de déplacement de la couche supérieure (b), muni d'ouvertures (f), les ouvertures (f) présentant un diamètre et une longueur, dans lequel l'introduction du mélange (a) a lieu au milieu du tube (c) et la longueur des ouvertures (f) diminue depuis le milieu du tube (c) vers ses extrémités.

2. Procédé selon la revendication 1, dans lequel au moins deux tubes (c) agencés l'un à côté de l'autre sont utilisés.

3. Procédé selon la revendication 2, dans lequel les tubes (c) munis d'ouvertures (f) sont agencés de manière à former une ligne droite.

4. Procédé selon la revendication 1, dans lequel les tubes (c) munis d'ouvertures (f) s'étendent sur au moins 70 % de la largeur de la couche supérieure (b), une zone à chaque fois de même largeur n'étant pas couverte par le tube aux bords de la couche supérieure (b).

5. Procédé selon la revendication 1, dans lequel les tubes (c) munis d'ouvertures (f) s'étendent sur au moins 80 % de la largeur de la couche supérieure (b), une zone à chaque fois de même largeur n'étant pas couverte par le tube aux bords de la couche supérieure (b).

6. Procédé selon la revendication 1, dans lequel le tube (c) muni d'ouvertures (f) est disposé à une hauteur de 5 à 30 cm au-dessus de la couche supérieure (b).

7. Procédé selon la revendication 1, dans lequel le diamètre du tube (c) muni d'ouvertures (f) est de 0,2 à 5 cm.

8. Procédé selon la revendication 1, dans lequel le diamètre intérieur du tube (c) muni d'ouvertures (f) reste constant depuis le milieu jusqu'aux bords du tube.

9. Procédé selon la revendication 1, dans lequel le tube est configuré de manière à ce que la variation de longueur des ouvertures (f) soit identique pour tous les tubes (c) lors de l'utilisation de plusieurs tubes (c).

10. Procédé selon la revendication 1, dans lequel le rapport entre la longueur des ouvertures (f) entre l'emplacement de l'introduction et l'extrémité du tube (c) pour chaque tube est compris entre 1,1 et 10.

11. Procédé selon la revendication 1, dans lequel le diamètre des ouvertures (f) est de 0,5 à 10 mm.

12. Procédé selon la revendication 1, dans lequel l'écart entre les ouvertures (f) est de 5 à 200 mm.

13. Procédé selon la revendication 1, dans lequel le diamètre des ouvertures (f) est identique sur la longueur totale du tube (c).

14. Procédé selon la revendication 1, dans lequel l'écart entre les ouvertures (f) est identique sur la longueur totale du tube (c).

15. Procédé selon la revendication 1, dans lequel le nombre d'ouvertures (f) du tube (c) est pair.

16. Procédé selon la revendication 1, dans lequel le nombre d'ouvertures (f) de chaque tube (c) est ≥ 2.

17. Procédé selon la revendication 1, dans lequel le mélange des composants du matériau de départ liquide pour la mousse dure à base d'isocyanate (a) a lieu dans un dispositif de mélange qui est raccordé par des conduites d'alimentation (d) et (e) avec tous les tubes (c) munis d'ouvertures (f).

18. Procédé selon la revendication 1, dans lequel chacun des tubes (c) munis d'ouvertures (f) est raccordé avec exactement une conduite d'alimentation (d).

19. Procédé selon la revendication 1, dans lequel chacun des tubes (c) munis d'ouvertures (f) est raccordé avec un dispositif de mélange pour le mélange des composants du matériau de départ liquide pour la mousse dure à base d'isocyanate (a).

20. Procédé selon la revendication 1, dans lequel le diamètre des conduites d'alimentation (d) est constant.

21. Procédé selon la revendication 1, dans lequel les conduites d'alimentation (d) présentent un diamètre de 4 à 30 mm.

22. Procédé selon la revendication 1, dans lequel la mousse dure à base d'isocyanate (a) contient des groupes isocyanurate.

23. Procédé selon la revendication 1, dans lequel la viscosité du matériau de départ liquide pour la mousse dure à base d'isocyanate (a) à 25 °C est comprise entre 50 mPa*s et 2 000 mPa*s.

24. Procédé selon la revendication 1, dans lequel la quantité du matériau de départ liquide pour la mousse dure à base d'isocyanate (a) appliquée sur la couche supérieure (b) est comprise entre 2 kg/minute et 100 kg/minute.

25. Dispositif pour l'application de mélanges réactionnels liquides sur une couche supérieure (b), la couche supérieure (b) étant déplacée en continu et le matériau de départ pour la mousse dure à base d'isocyanate (a) étant appliqué sur la couche supérieure (b), et l'application du mélange réactionnel liquide sur la couche supérieure (b) ayant lieu au moyen d'au moins un tube (c) fixe, disposé parallèlement au plan de la couche supérieure et perpendiculairement à la direction de déplacement de la couche supérieure (b), muni d'ouvertures (f), les ouvertures (f) présentant un diamètre et une longueur, dans lequel l'introduction du mélange (a) a lieu au milieu du tube (c) et la longueur des ouvertures (f) diminue depuis le milieu du tube (c) vers ses extrémités.

26. Dispositif selon la revendication 25, dans lequel l'application du mélange réactionnel liquide sur la couche supérieure (b) a lieu au moyen d'au moins deux tubes (c) fixes, disposés parallèlement au plan de la couche supérieure et perpendiculairement à la direction de déplacement de la couche supérieure (b), munis d'ouvertures (f), agencés l'un à côté de l'autre.
